# EUROPÄISCHE PATENTSCHRIFT

(11) **EP 1 533 057 B1**
(45) Veröffentlichungstag und Bekanntmachung des Hinweises auf die Patenterteilung: **13.06.2007**
(21) Anmeldenummer: 03025995.6
(22) Anmeldetag: 14.11.2003
(51) Int. Cl.: B23B 31/107, B23B 45/00, B23Q 3/12

(54) **Werkzeugkopf eines Elektrowerkzeuges, insbesondere eines Bohrschraubers**
Toolholder of a power tool, particularly a screwdriver
Porte-outils pour un outil électrique, notamment pour une visseuse

(43) Veröffentlichungstag der Anmeldung: 25.05.2005
(73) Patentinhaber: A & M Electric Tools GmbH, 71364 Winnenden (DE)
(72) Erfinder: Hirt, Dieter, 71364 Winnenenden (DE); Geis, Wilhelm, 71397 Leutenbach (DE)
(74) Vertreter: Riedel, Peter

(56) Entgegenhaltungen:
- WO-A-00/66329
- FR-A- 1 424 002
- US-A- 4 824 298
- US-A- 5 810 366
- US-A1- 2003 178 797

## Beschreibung

Die Erfindung betrifft einen Werkzeugkopf eines Elektrowerkzeuges, insbesondere eines Bohrschraubers mit den Merkmalen nach dem Oberbegriff des Anspruchs 1.

Ein solcher Werkzeugkopf ist z.B. aus US 4824298 A bekannt.

An handgeführte Elektrowerkzeuge wie Bohrmaschinen, Bohrschrauber oder dgl. sind zunehmend Anforderungen hinsichtlich einer universellen Einsetzbarkeit gestellt. Dazu sind bei bekannten Ausführungen Spannfutter für Werkzeuge vorgesehen, die auswechselbar, lösbar und rastend an einer Werkzeugspindel des Elektrowerkzeuges festlegbar sind. Über die rastende Festlegung können unterschiedliche Spannfutter für unterschiedliche Werkzeuge in einfacher Weise an der Werkzeugspindel festgelegt bzw. ausgewechselt werden. So kann beispielsweise ein Dreibackenspannfutter zur Aufnahme von Bohrern gegen eine Spanndornaufnahme beispielsweise für Fräsköpfe ausgetauscht werden. Bei Bohrschraubern kann auch ein Schrauberbit oder dgl. direkt in die Werkzeugspindel einsetzbar sein, wobei ein Bohrfutter lediglich bedarfsweise auf die Werkzeugspindel aufgesetzt wird.

Es sind Ausführungen bekannt, bei denen zum Aufbringen eines Spannfutters auf die Werkzeugspindel ein entsprechendes Rastelement mittels Drucktasten entriegelt wird. Eine derartige Montage eines Spannfutters ist umständlich, da die Drucktasten erst gefunden bzw. erfühlt werden müssen. Die Drucktasten sind darüber hinaus verschmutzungsempfindlich. Eine Entriegelung des Rastelementes bei der Montage des Spannfutters kann auch über einen axial bezüglich des Spannfutters verschieblichen Arretierring erfolgen. Der Arretierring wird dabei in Richtung des freien Endes des Spannfutters, also entgegen die Montagerichtung gezogen. Insbesondere bei in das Spannfutter eingesetztem Werkzeug ist eine derartige Entriegelung bei gleichzeitigem Aufschieben des Spannfutters auf die Werkzeugspindel umständlich.

Die rastende Festlegung eines Spannfutters auf einer Werkzeugspindel ist problematisch hinsichtlich eines präzisen Sitzes auf der Werkzeugspindel mit entsprechend einhergehender Rundlaufungenauigkeit.

Der Erfindung liegt die Aufgabe zugrunde, einen Werkzeugkopf der eingangs erwähnten Gattung derart weiterzubilden, daß eine leichte Auswechselbarkeit bzw. Montage gegeben ist.

Die Aufgabe wird durch einen Werkzeugkopf mit den Merkmalen des Anspruchs 1 gelöst.

Dazu wird ein entsprechender Werkzeugkopf vorgeschlagen, bei dem das Rastelement in einer Sperrposition eines Verriegelungselementes durch dieses Verriegelungselement gesperrt ist.

Dabei ist mindestens ein Steuerelement vorgesehen, mittels dessen das Verriegelungselement beim Aufbringen des Spannfutters auf die Werkzeugspindel selbsttätig in eine das Rastelement zumindest teilweise freigebende Freigabeposition bewegbar ist. Bei der vorgeschlagenen Anordnung ist für die Montage des Spannfutters auf die Werkzeugspindel eine separate Entriegelung des Rastelementes nicht erforderlich. Vielmehr erfolgt die zur Montage erforderliche Entriegelung des Rastelementes selbsttätig beim Aufbringen des Spannfutters. Der Montagevorgang beschränkt sich auf den eigentlichen Aufschiebevorgang, der ohne weiteres mit einer Hand in beliebiger Position der Werkzeugmaschine und auch mit eingespanntem Bohrer oder dgl. erfolgen kann.

Je nach Anwendungsfall kann es zweckmäßig sein, das Rastelement zur drehmomentübertragenden oder zur axial sichernden Festlegung des Spannfutters vorzusehen. In einer vorteilhaften Weiterbildung ist das Rastelement zur Festlegung in beide Kraftrichtungen vorgesehen, wodurch in Ausübung dieser Doppelfunktion auf zusätzliche Mittel zur Kraftübertragung verzichtet werden kann.

Das Rastelement, das Steuerelement und das Verriegelungselement sind zweckmäßig im Spannfutter integriert. Die Werkzeugspindel kann dabei insgesamt sehr klein gehalten sein. Bei Einsatz des Elektrowerkzeuges beispielsweise als Schraubwerkzeug ergeben sich dadurch sehr kompakte Außenmaße, die die Handhabbarkeit auch unter beengten Umgebungsbedingungen verbessern.

Das Rastelement ist vorteilhaft als radial verschiebliche Rastkugel ausgebildet, die in einer Montageposition des Spannfutters in eine Rasttasche eingreift. Die kugelförmige Ausbildung führt bei der Montage bzw. Demontage des Spannfutters zu einer Abrollbewegung des Rastelementes, in dessen Folge die aufzubringenden Handkräfte gering sind. Der Eingriff der Rastkugel in eine entsprechende Rasttasche führt in der Montageposition zu einer hinreichenden und zuverlässigen Kraftübertragung von der Werkzeugspindel auf das Spannfutter. Zweckmäßig sind dabei mehrere, in Umfangsrichtung äquidistant zueinander angeordnete Rastkugeln mit entsprechenden Rasttaschen vorgesehen. Damit wird eine im wesentlichen symmetrische Kraftübertragung von der Werkzeugspindel auf das Spannfutter unter Vermeidung von Exzentrizitäten erreicht. Die in Umfangsrichtung äquidistante Anordnung erlaubt eine Montage in verschiedenen Drehpositionen, wobei in allen geeigneten Drehpositionen ein Rastelement die entsprechende Rasttasche findet. Das Spannfutter kann in einer beliebigen Drehlage zunächst axial auf die Werkzeugspindel bis zu einem Anschlag geschoben werden. Bei einer anschließenden Relativdrehung in beliebiger Richtung schnappen die Rastkugeln in die entsprechenden Rasttaschen ein und führen zu einer zuverlässigen Festlegung des Spannfutters. Als zweckmäßiger Kompromiß hinsichtlich Bauraum, erzielbarer Kraftübertragung und leichter Montage hat sich eine Anordnung mit vier in Umfangsrichtung äquidistant angeordneten Rastkugeln und entsprechenden Rasttaschen herausgestellt.

Das Verriegelungselement ist dabei vorteilhaft als axial verschiebliche Riegelhülse ausgebildet, die die Rastkugel in einer Sperrposition radial außenseitig übergreift. Die radial außenseitige Umschließung vermeidet zuverlässig ein Herausdrücken der Rastkugeln aus den entsprechenden Rasttaschen. Es ist damit mit einfachen Mitteln eine formschlüssige Verbindung zwischen dem Spannfutter und der Werkzeugspindel hergestellt, mit der zuverlässig eine Übertragung auch großer Kräfte möglich ist. Ein unbeabsichtigtes Lösen beispielsweise bei Stoßbeanspruchung ist vermieden.

Zur weiteren Vereinfachung des Montagevorganges ist das Steuerelement als radial verschiebliche Steuerkugel ausgebildet, die mittels einer spindelseitigen Oberflächenkontur radial nach außen verschieblich ist. Dabei ist vorgesehen, daß die Riegelhülse mittels einer innen liegenden, insbesondere als Innenkonus ausgebildeten und mit der Steuerkugel in Wechselwirkung stehenden Schrägfläche in axialer Richtung gegen eine Federkraft in die Freigabeposition bewegbar ist. Bei der vorgeschlagenen Bauweise sind nur geringe radiale Wege der Steuerkugel erforderlich, um eine entsprechende axiale Verschiebung der Riegelhülse herbeizuführen. Der in radialer Richtung erforderliche Bauraum ist dementsprechend gering. Die erforderlichen Betätigungskräfte sind durch eine bei der Montage erfolgende Abrollbewegung der Steuerkugel entsprechend klein gehalten. Die zur radialen Verschiebung der Steuerkugel vorgesehene Oberflächenkontur ist dabei zweckmäßig durch einen zylindrischen Paßsitz der Werkzeugspindel für das Spannfutter gebildet. Der zur Verfügung stehende Bauraum kann dabei weitestgehend durch den Paßsitz in Anspruch genommen werden, in dessen Folge ein präziser Rundlauf des Spannfutters mit der Werkzeugspindel gegeben ist.

Vergleichbar zu den Rastkugeln sind auch bei den Steuerelementen vorteilhaft mehrere, in Umfangsrichtung äquidistant angeordnete und insbesondere zwei diametral sich gegenüberliegende Steuerkugeln mit entsprechenden Ruhevertiefungen vorgesehen. Auch hier ist eine exzentrische Krafteinleitung vermieden. Beim zuvor beschriebenen Montagevorgang kann ein Aufschieben des Spannfutters ungeachtet seiner Winkelstellung erfolgen. Bei einer anschließenden Relativdrehung des Spannfutters fallen die Steuerkugeln in ihre entsprechenden Ruhevertiefungen und geben die Riegelhülse frei. Diese wird mittels ihrer anliegenden Federvorspannung in ihre Sperrposition bewegt. Die Rastglieder sind entsprechend gesperrt, in dessen Folge ein fester, selbsttätig nicht lösbarer Sitz des Spannfutters auf der Werkzeugspindel gegeben ist.

Die Lage der Steuerkugeln ist dabei zweckmäßig um 45° gegenüber der Lage der vier Rastkugeln versetzt. Insbesondere in Verbindung mit dem axialen Versatz ist eine nachteilige gegenseitige Beeinflussung vermieden.

In einer zweckmäßigen Weiterbildung ist die Riegelhülse beim Aufbringen des Spannfutters auf die Werkzeugspindel mittels der auf die Schrägfläche wirkenden Rastkugel über die Freigabeposition hinaus in eine die Rastkugel vollständig freigebende Endposition beweglich. Beim Aufschieben des Spannfutters wird zunächst die Riegelhülse mittels der Steuerkugel in axialer Richtung in die Freigabeposition derart verschoben, daß die Rastkugel teilweise freigegeben ist. Dabei ist die Rastkugel soweit freigegeben, daß sie beim weiteren Aufschieben des Spannfutters der Oberflächenkontur der Werkzeugspindel weiter radial nach außen folgen kann. Gleichzeitig wird dabei die Riegelhülse weiter in Richtung der Endposition soweit axial verschoben, daß die Rastkugel insoweit vollständig freigegeben ist, daß sie über die Oberflächenkontur ungehindert gleitend bzw. rollend in die entsprechende Rasttasche gelangen kann. Dadurch wird erreicht, daß zur Montage des Spannfutters eine nur geringe axiale Beweglichkeit der Riegelhülse erforderlich ist. Es ist nur ein entsprechend geringer axialer Bauraum erforderlich. Das Spannfutter kann insgesamt kompakt aufgebaut sein. Die Rastkugel und die Steuerkugel sind dabei zweckmäßig in axialer Richtung insbesondere um etwa 1 bis 2 mm zueinander versetzt angeordnet. Beim Aufschieben des Spannfutters erfolgt zunächst eine erste Verschiebung der Riegelhülse mittels der Steuerkugel. Nach weiterem Aufschieben um etwa 1 bis 2 mm erfolgt eine abschließende Verschiebung der Steuerhülse mittels der Rastkugel. Der axiale Versatz beider Kugeln zueinander um das genannte Maß hat sich als zweckmäßiger Kompromiß zwischen Bauraum und aufzubringenden Montagekräften herausgestellt.

Für eine einfache Demontage des Spannfutters hat sich ein rings um das Spannfutter verlaufender, axial verschieblicher und mit der Riegelhülse in Wechselwirkung stehender Arretierring herausgestellt. Der Arretierring ist verschmutzungsunempfindlich und umschließt schützend die Verriegelungseinrichtung. Zur Demontage des Spannfutters kann dieser in Richtung des freien Endes, also in Demontagerichtung gezogen werden. Dabei wird die Riegelhülse in die Freigabeposition bzw. darüber hinaus in die Endposition geschoben. Die Rastkugel und die Steuerkugel sind soweit freigegeben, daß sie aus ihrer jeweiligen Rasttasche bzw. Ruhevertiefung herausgleiten bzw. rollen können. Das Spannfutter kann dabei durch einfaches Ziehen am Arretierring ohne zusätzliche Kraftaufbringung am Grundkörper des Spannfutters von der Werkzeugspindel abgezogen werden.

In Ruhe- bzw. Sperrposition der Riegelhülse sind die Steuerkugeln radial nach außen durch die anliegende Schrägfläche der Riegelhülse gehalten. Um auch eine sichere Führung der Steuerkugeln in Freigabe- bzw. Endposition der Riegelhülse zu gewährleisten, weist der Arretierring eine Begrenzungsfläche auf, die zusammen mit der Schrägfläche der Riegelhülse einen Begrenzungsraum für die Steuerkugel bildet. Die Steuerkugel ist in jeder beliebigen Position der Riegelhülse sicher gehalten bzw. geführt, ohne daß zusätzliche, kostenintensive Maßnahmen dazu erforderlich sind.

Zur weiteren Verbesserung der Rundlaufgenauigkeit des Spannfutters ist an einem freien Ende der Werkzeugspindel eine mit einem entsprechenden Gegenstück des Spannfutters im montierten Zustand in Eingriff stehende Führung vorgesehen. In Verbindung mit dem zuvor beschriebenen zylindrischen Paßsitz ergibt sich eine exakte Zentrierung des Spannfutters. Bei entsprechend großem axialen Versatz zwischen der Führung und dem Paßsitz braucht der Paßsitz eine nur geringe axiale Erstreckung aufzuweisen. Damit einhergehend ist nur ein kurzer axialer Aufschiebeweg des Spannfutters auf die Werkzeugspindel erforderlich. Es ist eine kompakte Bauweise mit hoher Rundlaufgenauigkeit erzielbar.

Ausführungsbeispiele der Erfindung sind im folgenden anhand der Zeichnung näher beschrieben. Es zeigen:
- Fig. 1: in einer Längsschnittdarstellung Einzelheiten einer Werkzeugspindel eines Bohrschraubers mit einem Paßsitz und Ruhevertiefungen für ein aufzuschiebendes Spannfutter;
- Fig. 2: die Anordnung nach Fig. 1 mit einem teilweise aufgeschobenen Spannfutter und einem verriegelten Rastelement;
- Fig. 3: eine schematische Detaildarstellung der Anordnung nach Fig. 2 mit aufgeschobenem Steuerelement und teilweise freigegebenem Rastelement;
- Fig. 4: die Anordnung nach Fig. 3 bei weiter aufgeschobenem Spannfutter mit vollständig freigegebenem Rastelement;
- Fig. 5: in einer Längsschnittdarstellung die Anordnung nach Fig. 2 mit vollständig aufgeschobenem Spannfutter und eingerastetem, verriegelten Rastelement;
- Fig. 6: die Anordnung nach den Figuren 2 und 5 bei der Demontage des Spannfutters mit einem gezogenen Arretierring und einem entriegelten Rastelement;
- Fig. 7: in einer Querschnittsdarstellung ein teilweise auf eine Werkzeugspindel aufgeschobenes Spannfutter;
- Fig. 8: eine Längsschnittdarstellung durch das Spannfutter und die Werkzeugspindel in einer abgewinkelten Schnittführung entsprechend der Linie VIII-VIII nach Fig. 7;
- Fig. 9: die Anordnung nach Fig. 8 mit auf der Werkzeugspindel eingerastetem Spannfutter;
- Fig. 10: die Schnittdarstellung nach Fig. 7 beim Abziehen des Spannfutters von der Werkzeugspindel;
- Fig. 11: die Anordnung nach den Fig. 8 und 9 beim Abziehen des Spannfutters von der Werkzeugspindel in einer abgewinkelten Schnittführung entlang der Linie XI-XI nach Fig. 10.

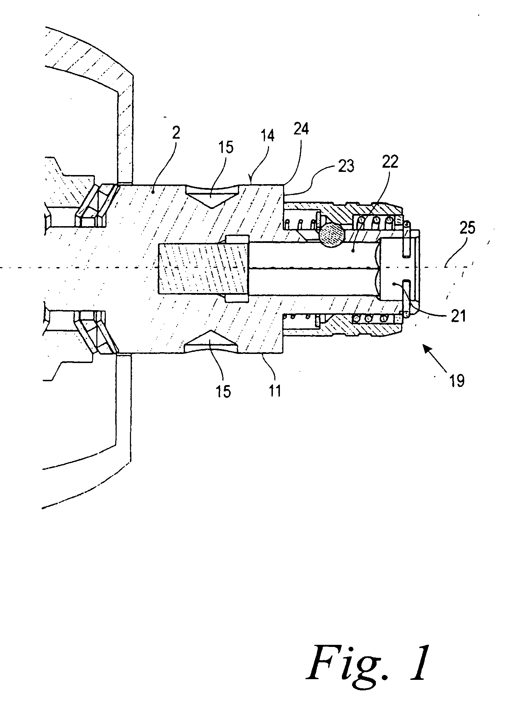

Fig. 1 zeigt in einer Längsschnittdarstellung ein Elektrowerkzeug am Beispiel eines Bohrschraubers im Bereich seines werkzeugseitigen Kopfteiles. Der Bohrschrauber weist eine um eine Drehachse 25 drehend antreibbare Werkzeugspindel 2 auf, an deren freien Ende 19 eine Werkzeugaufnahme 22 zur Aufnahme von genormten ¼ Zoll-Werkzeugen wie Schrauberbits oder dgl. vorgesehen ist. Stirnseitig der Werkzeugaufnahme 22 ist eine zylindrische Führung 21 vorgesehen.

Die Werkzeugspindel 2 weist eine Oberflächenkontur 11 auf, die im wesentlichen aus einem quer zur Drehachse 25 liegenden Anschlag 23, einer umlaufenden Kante 24 und einem zylindrischen Paßsitz 14 gebildet ist. Im Paßsitz 14 sind zwei diametral gegenüberliegende Ruhevertiefungen 15 vorgesehen.

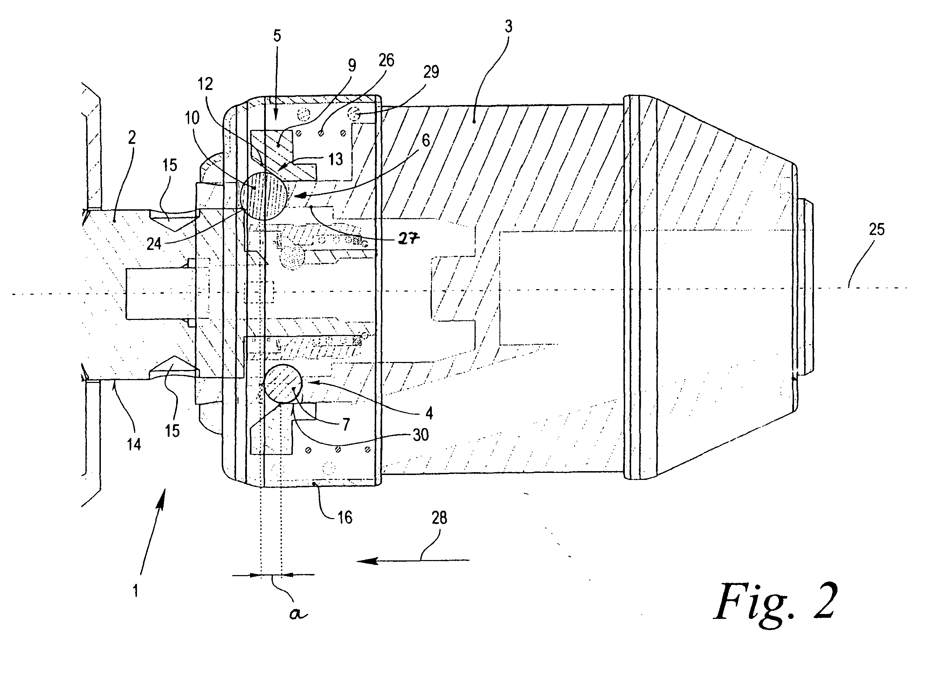

Fig. 2 zeigt die Anordnung nach Fig. 1 mit einem teilweise auf die Werkzeugspindel 2 aufgeschobenem Spannfutter 3. Die gezeigte Anordnung bildet dabei einen Werkzeugkopf 1, der die Werkzeugspindel 2 und das Spannfutter 3 umfaßt. Zur auswechselbaren, lösbaren und rastend festlegbaren Verbindung des Spannfutters mit der Werkzeugspindel 2 ist ein Rastelement 4 vorgesehen, welches im gezeigten Ausführungsbeispiel als Rastkugel 7 ausgebildet ist. Das Rastelement 4 kann auch eine Sperrklinke, ein Federelement oder dgl. sein.

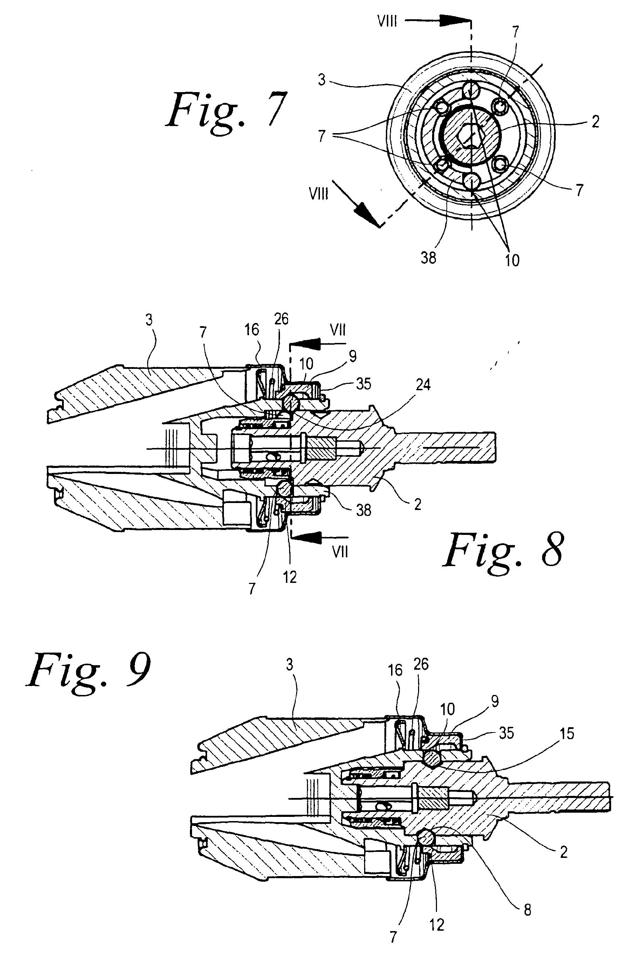

Der Längsschnitt durch das Spannfutter 3 nach Fig. 2 ist so geführt, daß die Schnittebene oberhalb der Drehachse 25 um 45° zur Schnittebene unterhalb der Drehachse 25 liegt. Demnach sind insgesamt vier gleichmäßig über den Umfang im 90°-Winkel zueinander liegend verteilte Rastkugeln 7 vorgesehen, von denen nur die untere Rastkugel 7 der besseren Übersichtlichkeit halber dargestellt ist. Um 45° bezogen auf die Drehachse 25 versetzt dazu sind zwei diametral sich gegenüberliegende Steuerelemente 6 vorgesehen, die im gezeigten Ausführungsbeispiel als Steuerkugeln 10 ausgeführt sind. Die relative Lage der Steuerkugeln 10 zu den Rastkugeln 7 ergibt sich auch aus Fig. 7. Als Steuerelemente 6 können auch Schwenkhebel, Gleitkeile oder dgl. vorgesehen sein. Der besseren Übersichtlichkeit halber ist auch hier nur eine Steuerkugel 10 im oberen Bereich der Fig. 2 dargestellt.

Im Spannfutter 3 ist neben den Rastkugeln 7 und den Steuerkugeln 10 auch ein Verriegelungselement 5 angeordnet, das im gezeigten Ausführungsbeispiel als umlaufende, mit den Rastkugeln 7 und den Steuerkugeln 10 in Wechselwirkung stehende Riegelhülse 9 ausgeführt ist. Die Riegelhülse 9 ist im Spannfutter 3 axial verschieblich geführt und mittels einer Druckfeder 26 entgegen der Richtung des freien Endes 19 (Fig. 1) vorgespannt. Die Riegelhülse 9 weist eine unter der Vorspannung der Druckfeder 26 an den Steuerkugeln 10 anliegende innenseitige Schrägfläche 13 auf, die durch einen umlaufenden Innenkonus 12 gebildet ist. Es können auch einzelne Schrägflächen 13 für jedes einzelne Steuerelement 6 vorgesehen sein. An den Innenkonus 12 schließt sich eine zylindrische Innenfläche 30 an. Die Riegelhülse 9 ist bezogen auf die axiale Richtung des Grundkörpers des Spannfutters 3 in einer Sperrposition gezeigt, bei der die Riegelhülse 9 mit ihrer zylindrischen Innenfläche 30 die Rastkugeln 7 außenseitig übergreift. Die radial im Spannfutter 3 beweglich geführten Rastkugeln 7 sind dadurch in ihrer radialen Beweglichkeit nach außen eingeschränkt.

Die Steuerkugeln 10 und die Rastkugeln 7 sind bezogen auf die axiale Richtung der Drehachse 25 um das Maß a versetzt zueinander angeordnet, wobei das Maß a im gezeigten Ausführungsbeispiel etwa 1 bis 2 mm beträgt. Beim Aufschieben des Spannfutters 3 auf die Werkzeugspindel 2 in Richtung des Pfeiles 28 liegen die Steuerkugeln 10 an der Kante 24 der Werkzeugspindel 2 an, wodurch eine Kraft von den Steuerkugeln 10 auf den Innenkonus 12 der Riegelhülse 9 ausgeübt wird.

Das Spannfutter 3 weist innenseitig eine zylindrische Paßbohrung 27 auf, die bei montiertem Spannfutter 3 den Paßsitz 14 der Werkzeugspindel 2 zumindest näherungsweise spielfrei umschließt. Des weiteren ist am Spannfutter 3 ein umlaufender Arretierring 16 vorgesehen, der aus seiner gezeigten Ruhelage gegen die Vorspannkraft einer Druckfeder 29 entgegen der Montagerichtung 28 verschieblich ist.

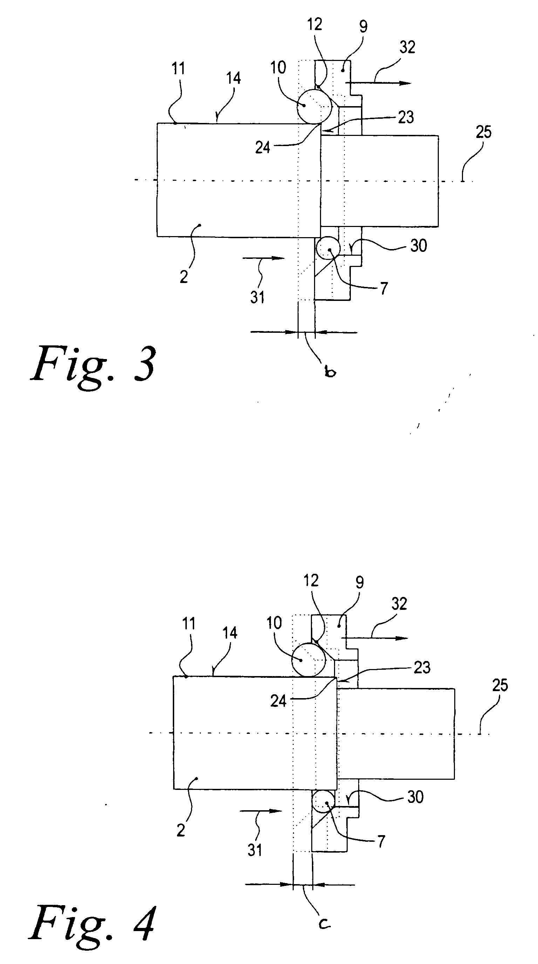

Fig. 3 zeigt in schematischer Darstellung ausschnittsweise die Anordnung nach Fig. 2, bei der das Spannfutter 3, um ein erstes Teilstück auf die Werkzeugspindel 2 geschoben ist. Die Steuerkugel 10 ist dabei über die Kante 24 auf den Paßsitz 14 gerollt und dabei radial nach außen bezüglich der in Fig. 2 gezeigten Position verschoben. Durch die Anlage der Steuerkugel 10 an den Innenkonus 12 der Riegelhülse 9 ist die Riegelhülse 9 dabei relativ zur gestrichelt angedeuteten Sperrposition in Richtung des Pfeiles 32 um das Maß b in die mit durchgezogener Linie dargestellte Freigabeposition verschoben. Die Rastkugel 7 ist dabei in radialer Richtung teilweise freigegeben und liegt sowohl an der Kante 24 als auch am Innenkonus 12 an.

Fig. 4 zeigt die Anordnung nach Fig. 3, bei der das Spannfutter 3 (Fig. 2) um ein weiteres Stück in axialer Richtung aufgeschoben ist. Die Rastkugel 7 ist dabei in radialer Richtung vollständig freigegeben, indem sie außenseitig am Paßsitz 14 anliegt. Über ihre Wechselwirkung mit dem Innenkonus 12 und der bezogen auf die Position nach Fig. 3 radial weiter außen liegenden Position ist die Riegelhülse 9 um das Maß c in eine Endposition verschoben. Das Maß c ist dabei größer als das in Fig. 3 gezeigte Maß b, demnach die gezeigte Endposition über die in Fig. 3 gezeigte Freigabeposition hinausgehend liegt. Die Rastkugeln 7 und die Steuerkugeln 10 sind dabei dergestalt vollständig freigegeben, daß sie gemeinsam mit dem Spannfutter 3 (Fig. 2) ungehindert abrollend bzw. -gleitend über den Paßsitz 14 geschoben werden können. Das Verriegelungselement 5 ist damit mittels der Steuerkugeln 10 beim Aufbringen des Spannfutters 3 (Fig. 2) auf die Werkzeugspindel 2 selbsttätig in eine die Rastkugeln 7 freigebende Freigabeposition bewegbar.

Der axiale Versatz a von den Rastkugeln 7 zu den Steuerkugeln 10 von etwa 1 bis 2 mm nach Fig. 2 sowie die übrigen geometrischen Einflußgrößen wie Kugeldurchmesser, Schrägungswinkel der Schrägfläche 13 usw. können auch so aufeinander abgestimmt sein, daß bereits in der nach Fig. 3 vorgesehenen Freigabeposition der Riegelhülse 9 auch die Rastelemente 4 bzw. Rastkugeln 7 entsprechend Fig. 4 vollständig freigegeben sind.

Die kinematische Beziehung der Bewegungen von den Rastkugeln 7, den Steuerkugeln 10 und der axialen Verschiebung der Riegelhülse 9 sind von der Oberflächenkontur 11 der Werkzeugspindel 2 beeinflußt. Anstelle der gezeigten Oberflächenkontur 11 mit einem Paßsitz 14, einer Kante 24 und einem Anschlag 23 kann auch eine schräge Ebene, ein Konus oder dgl. vorgesehen sein.

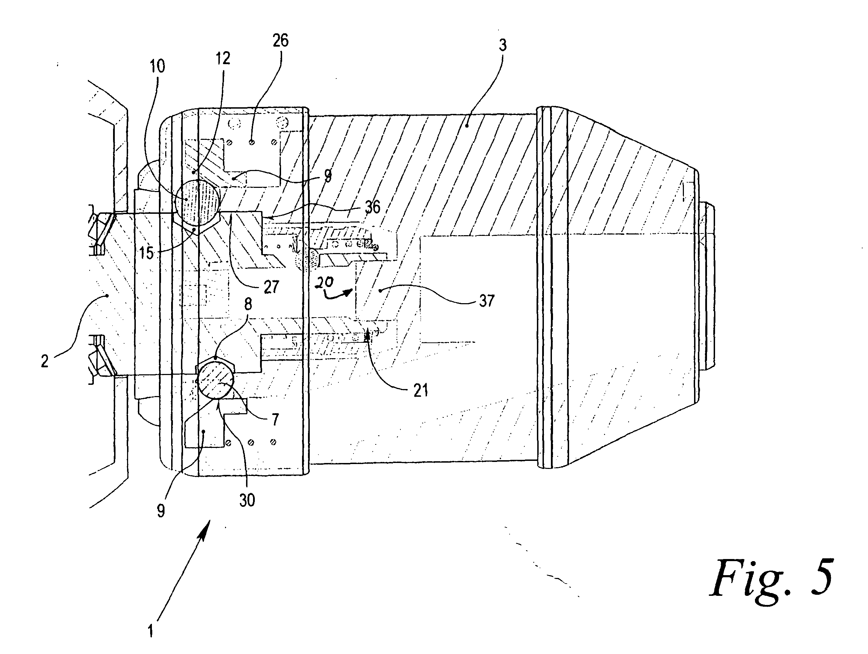

Fig. 5 zeigt die Anordnung nach Fig. 2 mit dem vollständig auf die Werkzeugspindel 2 aufgeschobenem Spannfutter 3. Die Werkzeugspindel 2 weist dabei passend zu den Steuerkugeln 10 angeordnete Ruhevertiefungen 15 und passend zu den Rastkugeln 7 angeordnete Rasttaschen 8 auf. Die Rasttaschen 8 und/oder die Ruhevertiefungen 15 können als umlaufende Nuten ausgebildet sein, wobei die rastende Verbindung des Spannfutters mit der Werkzeugspindel lediglich in axialer Richtung wirkt. Im gezeigten Ausführungsbeispiel sind die Rasttaschen 8 und die Ruhevertiefungen 15 als Sackbohrungen ausgeführt, in die die Rastkugeln 7 bzw. Steuerkugeln 10 eingreifen. Passend zur Anzahl und Positionierung der Rastkugeln 7 und der Steuerkugeln 10 sind vier gleichmäßig über den Umfang verteilte Rasttaschen 8 angeordnet, die um 45° versetzt zu den zwei diametral gegenüberliegenden Ruhevertiefungen 15 liegen. Es können auch vier gleichmäßig über den Umfang verteilte, um 45° zu den Rasttaschen 8 versetzt angeordnete Ruhevertiefungen 15 vorgesehen sein. Der besseren Übersichtlichkeit halber sind in Fig. 5 wie auch in Fig. 2 oberhalb und unterhalb der Drehachse 25 zwei verschiedene, 135° zueinander liegende Schnittebenen mit jeweils nur einer Steuerkugel 10 und zugehöriger Ruhevertiefung 15 bzw. nur einer Rastkugel 7 mit zugehöriger Rasttasche 8 dargestellt.

Unter Wirkung der Druckfeder 26 sind die Steuerkugeln 10 mittels des anliegenden Innenkonus 12 in die Ruhevertiefungen 15 gedrückt. Die Riegelhülse 9 ist dabei mittels der Druckfeder 26 in die nach Fig. 2 vorgesehene Sperrposition zurückgeschoben, wobei sie mit ihrer zylindrischen Innenfläche 30 die Rastkugeln 7 außenseitig umgreift. Die Rastkugeln 7 sind dabei in den Rasttaschen 8 liegend gesperrt und an einer Bewegung radial nach außen gehindert. Mittels der in die Rasttaschen 8 eingreifenden Rastkugeln 7 ergibt sich eine formschlüssige Verbindung des Spannfutters 3 mit der Werkzeugspindel 2 sowohl in Umfangsrichtung als auch in axialer Richtung.

Anstelle der gezeigten Anordnung mit zwei diametral sich gegenüberliegenden Steuerkugeln 10 und vier über den Umfang verteilte Rastkugeln 7 kann auch eine Anordnung mit zwei, drei oder mehr in Umfangsrichtung äquidistant zueinander angeordneten Steuerkugeln 10 bzw. Rastkugeln 7 mit einer entsprechenden Anzahl von Ruhevertiefungen 15 und Rasttaschen 8 zweckmäßig sein.

In der gezeigten Montageposition umschließt die Paßbohrung 27 zumindest annähernd spielfrei den Paßsitz 14 (Fig. 1) wobei ein Radialabsatz 36 des Spannfutters 3 bündig am Anschlag 23 (Fig. 1) anliegt. Als Gegenstück 20 für die Führung 21 ist am Spannfutter 3 ein konzentrischer Zapfen 37 vorgesehen. Dabei greift der konzentrische Zapfen 37 zumindest annähernd spielfrei in die Führung 21 (Fig. 1) der Werkzeugspindel 2, wodurch ein paßgenauer Sitz des Spannfutters 3 an der Werkzeugspindel 2 mit hoher Rundlaufgenauigkeit erzielt ist.

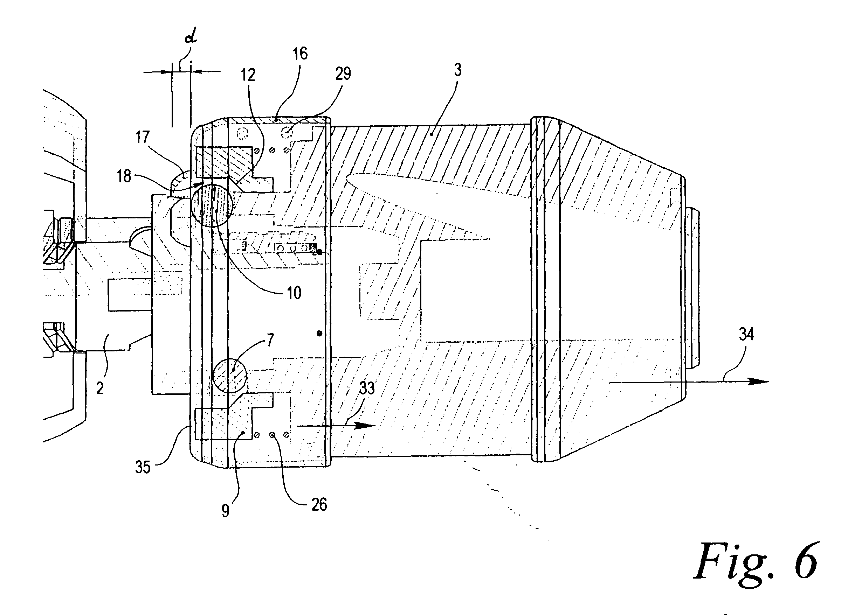

Fig. 6 zeigt die Anordnung nach den Figuren 2 und 5 bei der Demontage des Spannfutters 3 von der Werkzeugspindel 2. Zum Abziehen des Spannfutters 3 in Richtung des Pfeiles 34 ist dabei der Arretierring 16 relativ zum Grundkörper des Spannfutters 3 in Richtung des Pfeiles 33 um das Maß d gezogen. Das Maß d beträgt bevorzugt etwa 2 mm. Der Arretierring 16 weist eine hintere Stirnwand 35 auf, die beim Ziehen des Arretierrings 16 in Richtung des Pfeiles 33 zur Anlage an die Riegelhülse 9 kommt. Die Riegelhülse 9 wird dabei axial in die Freigabeposition nach Fig. 3 oder die Endposition nach Fig. 4 verschoben. Der Innenkonus 12 der Riegelhülse 9 und eine hintere, ausgewölbte Begrenzungsfläche 17 des Arretierrings 16 bilden dabei einen Begrenzungsraum 18 für die Steuerkugeln 10 und die Rastkugeln 7, innerhalb dessen sie radial soweit nach außen verschieblich sind, daß sie aus ihren Rasttaschen 8 bzw. Ruhevertiefungen 15 (Fig. 5) herausgleiten bzw. herausrollen können. Das Spannfutter 3 kann entriegelt in Richtung des Pfeiles 34 abgezogen werden, wobei die Rastkugeln 7 bzw. die Steuerkugeln 10 entsprechend Fig. 5 entlang dem Paßsitz 14 abrollen bzw. -gleiten. Nach vollständigem Abziehen des Spannfutters 3 und Loslassen des Arretierrings 16 werden der Arretierring 16, die Riegelhülse 9, die Rastkugeln 7 und die Steuerkugeln 10 mittels der Druckfedern 26, 29 in die Ausgangsposition entsprechend Fig. 2 zurückgeführt.

Fig. 7 zeigt in einer Querschnittsdarstellung ein weiteres Ausführungsbeispiel der Erfindung in einer Schnittführung VII-VII nach Fig. 8. Das Spannfutter 3 ist dabei teilweise auf die Werkzeugspindel 2 aufgeschoben.

Es sind insgesamt vier Rastkugeln 7 vorgesehen, die gleichmäßig über den Umfang verteilt im 90°-Winkel zueinander angeordnet sind. Um 45° bzw. 135° relativ dazu verdreht befinden sich zwei diametral gegenüberliegende Steuerkugeln 10. Die Rastkugeln 7 und die Steuerkugeln 10 sind in einer Hülse 38 des Spannfutters 3 geführt.

Im gezeigten teilweise aufgeschobenen Zustand des Spannfutters 3 ragen die Rastkugeln 7 radial nach innen aus der Hülse 38 hervor und liegen an der Kante 24 (Fig. 8) an. Die Steuerkugeln 10 sind relativ dazu mittels der Kante 24 nach außen geschoben.

Fig. 8 zeigt die Anordnung nach Fig. 7 in einer um 135° abgewinkelten Schnittführung entlang der dort gezeigten Linie VIII-VIII. Das Spannfutter 3 ist auf die Werkzeugspindel 2 soweit aufgeschoben, daß die Steuerkugeln 10 mittels der Kante 24 an der Werkzeugspindel 2 radial nach außen verschoben sind. Über den Innenkonus 12 ist die Riegelhülse 9 gegen die Vorspannkraft der konischen Druckfeder 26 soweit in Richtung des freien Endes des Spannfutters 3 verschoben, daß die Rastkugeln 7 einerseits an der Kante 24 und andererseits am Innenkonus 12 anliegen. Beim weiteren Aufschieben des Spannfutters 3 auf die Werkzeugspindel 2 können die Rastkugeln 7 über die Kante 24 rollen bzw. gleiten und dabei die Riegelhülse 9 weiter in Richtung des freien Endes des Spannfutters 3 verschieben.

Im gezeigten Ausführungsbeispiel ist der Arretierring 16 unabhängig von der Stellung der Riegelhülse 9 frei in axialer Richtung verschieblich. Dabei ist keine Druckfeder 29 entsprechend Fig. 2 vorgesehen. Der Arretierring 16 ist in seiner der Werkzeugspindel 2 zugewandten Endposition gezeigt. Die Riegelhülse 9 ist relativ zum Arretierring 16 in Richtung des freien Endes des Spannfutters 3 derart verschoben, daß ein Abstand zur Stirnfläche 35 des Arretierrings 16 gegeben ist. Durch die voneinander unabhängige axiale Verschieblichkeit der Riegelhülse 9 und des Arretierrings 16 ist ein unbehindertes Aufschieben des Spannfutters 3 auf die Werkzeugspindel 2 auch bei festgehaltenem Arretierring 16 ermöglicht.

Fig. 9 zeigt die Anordnung nach Fig. 8 mit vollständig auf die Werkzeugspindel 2 aufgeschobenem Spannfutter 3. Die Rastkugeln 7 sind radial nach innen in die Rasttaschen 8 gedrückt und dabei außenseitig formschlüssig mittels der Riegelhülse 9 gehalten. Die Steuerkugeln 10 liegen in ihren Ruhevertiefungen 15 und sind dabei mittels des Innenkonus 12 der Riegelhülse 9 über die Federkraft der Druckfeder 26 radial nach innen gedrückt. Die Riegelhülse 9 liegt an der Stirnfläche 35 des Arretierrings 16 an, wodurch der Arretierring 16 in seiner gezeigten axialen Endposition unter Einwirkung der Druckkraft der Druckfeder 26 gehalten ist.

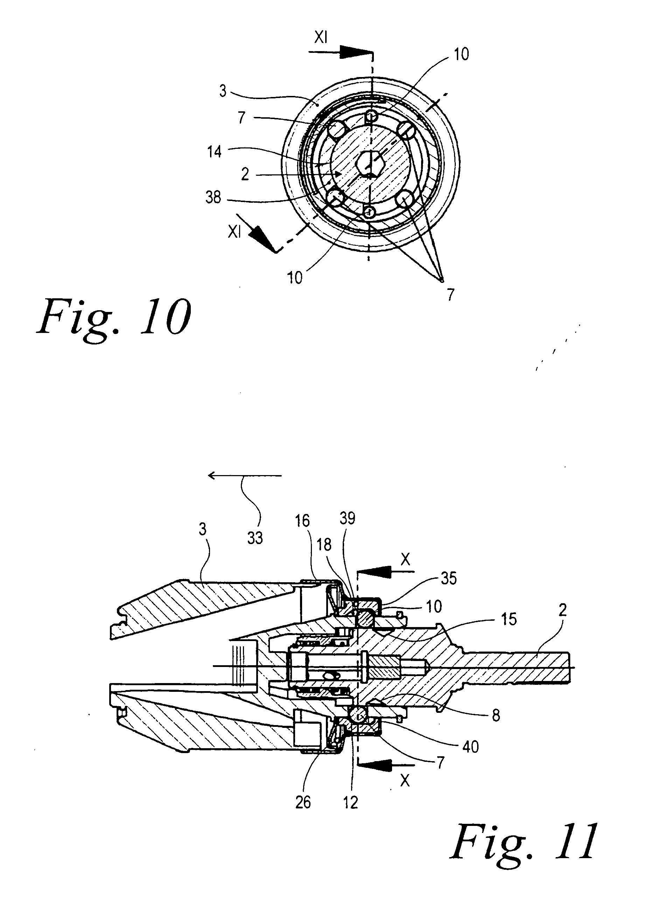

Fig. 10 zeigt die Anordnung nach Fig. 7 beim Abziehen des Spannfutters 3 von der Werkzeugspindel 2. Die Werkzeugspindel 2 ist im Bereich ihres Paßsitzes 14 (Fig. 1) gezeigt, wobei die Rastkugeln 7 und die Steuerkugeln 10 soweit radial in der Hülse 38 nach außen verschoben sind, daß sie außenseitig auf dem Paßsitz 14 liegen. Die gezeigte Querschnittsdarstellung entspricht dabei einer Ansicht entlang der Linie X-X nach Fig. 11.

Fig. 11 zeigt die Anordnung nach Fig. 8 und 9 beim Abziehen des Spannfutters 3 von der Werkzeugspindel 2 in einer um 135° abgewinkelten Schnittführung entlang der Linie XI-XI nach Fig. 10. Der Arretierring 16 ist dabei mittels Handkraft in Richtung des Pfeiles 33 relativ zum Spannfutter 3 und zu der in den Fig. 8 und 9 gezeigten Endposition gegen die Kraft der Druckfeder 26 gezogen. Eine umlaufende, innenliegende Umfangsnut 39 der Riegelhülse 9 gibt die Rastkugeln 7 und die Steuerkugeln 10 in radialer Richtung soweit frei, daß diese aus ihren Rasttaschen 8 bzw. Ruhevertiefungen 15 herausrollen bzw. - gleiten können und außenseitig auf den Paßsitz 14 (Fig. 10) der Werkzeugspindel 2 anliegen. Durch weiteres Ziehen des Spannfutters 3 in Richtung des Pfeiles 33 kann dieses vollständig von der Werkzeugspindel 2 abgezogen werden.

Die Umfangsnut 39 ist in axialer Richtung auf einer Seite durch den Innenkonus 12 und auf der gegenüberliegenden Seite durch eine umlaufende Kante 40 begrenzt. Die Umfangsnut 39 bildet damit einen Begrenzungsraum 18 sowohl für die Rastkugeln 7 als auch die Steuerkugeln 10. Ein radial nach außen gerichtetes Herauswandern der Kugeln 7, 10 aus der Hülse 38 ist dadurch verhindert.

In den übrigen Merkmalen und Bezugszeichen stimmt das Ausführungsbeispiel nach den Fig. 7 bis 11 mit dem Ausführungsbeispiel nach den vorhergehenden Fig. überein.

## Patentansprüche

1. Werkzeugkopf eines Elektrowerkzeuges, insbesondere eines Bohrschraubers, mit einer drehend antreibbaren Werkzeugspindel (2), einem auswechselbaren, lösbar und rastend an der Werkzeugspindel (2) festlegbaren Spannfutter (3) und mit einem zur Festlegung des Spannfutters (3) an der Werkzeugspindel (2) vorgesehenen Rastelement (4), welches radial verschieblich ist und in einer Montageposition des Spannfutters (3) in eine Rasttasche (8) der Werkzeugspindel (2) eingreift, und wobei das Rastelement (4) in einer Sperrposition eines Verriegelungselementes (5) durch das Verriegelungselement (5) gesperrt ist,
**dadurch gekennzeichnet, daß** das Verriegelungselement (5) als axial verschiebliche Riegelhülse (9) ausgebildet ist, die das Rastelement (4) in der Sperrposition radial außenseitig übergreift, und daß mindestens ein radial verschiebliches Steuerelement (6) vorgesehen ist, welches mittels einer spindelseitigen Oberflächenkontur (11) radial nach außen verschieblich ist, mittels dessen die Riegelhülse (9) beim Aufbringen des Spannfutters (3) auf die Werkzeugspindel (2) selbsttätig in eine das Rastelement (4) zumindest teilweise freigebende Freigabeposition bewegbar ist, indem die Riegelhülse (9) mittels einer innenliegenden und mit dem Steuerelement (6) in Wechselwirkung stehenden Schrägfläche (13) in axialer Richtung gegen eine Federkraft in die Freigabeposition bewegbar ist.

2. Werkzeugkopf nach Anspruch 1,
**dadurch gekennzeichnet, daß** das Rastelement (4) zur drehmomentübertragenden und axial sichernden Festlegung des Spannfutters (3) auf der Werkzeugspindel (2) vorgesehen ist.

3. Werkzeugkopf nach Anspruch 1 oder 2,
**dadurch gekennzeichnet, daß** das Rastelement (4), das Steuerelement (6) und das Verriegelungselement (5) im Spannfutter (3) integriert sind.

4. Werkzeugkopf nach einem der Ansprüche 1 bis 3,
**dadurch gekennzeichnet, daß** das Rastelement (4) als radial verschiebliche Rastkugel (7) ausgebildet ist.

5. Werkzeugkopf nach Anspruch (4),
**dadurch gekennzeichnet, daß** mehrere, insbesondere vier in Umfangsrichtung äquidistant angeordnete Rastkugeln (7) mit entsprechenden Rasttaschen (8) vorgesehen sind.

6. Werkzeugkopf nach Anspruch 4 oder 5,
**dadurch gekennzeichnet, daß** das Steuerelement (6) als radial verschiebliche Steuerkugel (10) ausgebildet ist.

7. Werkzeugkopf nach Anspruch 6,
**dadurch gekennzeichnet, daß** die Oberflächenkontur (11) durch einen zylindrischen Paßsitz (14) der Werkzeugspindel (2) für das Spannfutter (3) gebildet ist.

8. Werkzeugkopf nach Anspruch 6 oder 7,
**dadurch gekennzeichnet, daß** mehrere, in Umfangsrichtung äquidistant angeordnete und insbesondere zwei diametral sich gegenüberliegende Steuerkugeln (10) mit entsprechenden Ruhevertiefungen (15) vorgesehen sind.

9. Werkzeugkopf nach einem der Ansprüche 6 bis 8,
**dadurch gekennzeichnet, daß** die Riegelhülse (9) beim Aufbringen des Spannfutters (3) auf die Werkzeugspindel (2) mittels der auf die Schrägfläche (13) wirkenden Rastkugel (7) über die Freigabeposition hinaus in eine die Rastkugel (7) vollständig freigebende Endposition beweglich ist.

10. Werkzeugkopf nach Anspruch 9,
**dadurch gekennzeichnet, daß** die Rastkugel (7) und die Steuerkugel (6) in axialer Richtung insbesondere um etwa 1 bis 2 mm zueinander versetzt angeordnet sind.

11. Werkzeugkopf nach einem der Ansprüche 6 bis 10,
**dadurch gekennzeichnet, daß** ein rings um das Spannfutter (3) verlaufender, axial verschieblicher und mit der Riegelhülse (9) in Wechselwirkung stehender Arretierring (16) vorgesehen ist.

12. Werkzeugkopf nach Anspruch 11,
**dadurch gekennzeichnet, daß** durch die Schrägfläche (13) der Riegelhülse (9) und eine insbesondere umlaufende Begrenzungsfläche (17) des Arretierungsrings (16) ein Begrenzungsraum (18) für die Steuerkugel (10) gebildet ist.

13. Werkzeugkopf nach Anspruch 12,
**dadurch gekennzeichnet, daß** die Riegelhülse (9) auf der der Schrägfläche (13) abgewandten Seite der Begrenzungsfläche (17) eine hervorstehende Kante (40) als Abschluß für den Begrenzungsraum (18) aufweist.

14. Werkzeugkopf nach einem der Ansprüche 1 bis 13,
**dadurch gekennzeichnet, daß** an einem freien Ende (19) der Werkzeugspindel (2) eine mit einem entsprechenden Gegenstück (20) des Spannfutters (3) im montierten Zustand im Eingriff stehende Führung (21) vorgesehen ist.

## Claims

1. Toolholder of a power tool, particularly a screwdriver, with a rotationally driven tool spindle (2), an exchangeable chuck (3) which can be fixed in a detachable and engaging way on the tool spindle (2) and with a detent element (4) provided for fixing the chuck (3) on the tool spindle (2) which is radially displaceable and engages, in a mounted position of the chuck (3), in a detent pocket (8) of the tool spindle (2), and whereby the detent element (4) is locked by a locking element (5) in a locked position of the locking element (5),
**characterised in that** the locking element (5) is formed as an axially displaceable locking sleeve (9) which engages on the outer side radially over the detent element (4) in the locked position and **in that** at least one radially displaceable control element (6) is provided which can be displaced radially outwards by means of a spindle-side surface contour (11), by means of which the locking sleeve (9), upon arrangement of the chuck (3) on the tool spindle (2), can be moved independently into a release position at least partially releasing the detent element (4), **in that** the locking sleeve can be moved in axial direction against the force of a spring into the release position by means of an inner-lying inclined surface (13) cooperating with the control element (6).

2. Toolholder according to claim 1,
**characterised in that** the detent element (4) is provided for torque-transmitting and axially securing fixing of the chuck (3) on the tool spindle (2).

3. Toolholder according to claim 1 or 2,
**characterised in that** the detent element (4), the control element (6) and the locking element (5) are integrated in the chuck (3).

4. Tool element according to one of the claims 1 to 3,
**characterised in that** the detent element (4) is formed as a radially displaceable detent ball (7).

5. Toolholder according to claim 4,
**characterised in that** a plurality of, in particular four, detent balls (7) arranged equidistantly in the peripheral direction are provided with corresponding detent pockets (8).

6. Toolholder according to claim 4 or 5,
**characterised in that** the control element (6) is formed as a radially displaceable control ball (10).

7. Tool according to claim 6,
**characterised in that** the surface contour (11) is formed by a cylindrical fitting element (14) of the tool spindle (2) for the chuck (3).

8. Toolholder according to claim 6 or 7,
**characterised in that** a plurality of control balls arranged equidistantly in the peripheral direction and in particular two lying diametrally opposite each other are provided with corresponding resting depressions (15).

9. Toolholder according to one of the claims 6 to 8,
**characterised in that** the locking sleeve (9), upon arrangement of the chuck (3) on the tool spindle (2), can be moved beyond the release position into an end position completely releasing the detent balls (7) by means of the detent balls (7) acting on the inclined surface (13).

10. Toolholder according to claim 9,
**characterised in that** the detent balls (7) and the control balls (6) are arranged in axial direction in particular offset by 1 to 2 mm to each other.

11. Toolholder according to one of the claims 6 to 10,
**characterised in that** a locking element (16) is provided which extends in a ring around the chuck (3), is axially displaceable and cooperates with the locking sleeve (9).

12. Toolholder according to claim 11,
**characterised in that** through the inclined surface (13) of the locking sleeve (9) and a particularly surrounding delimitation surface (17) of the locking ring (16) a delimitation area (18) is formed for the control balls (10).

13. Toolholder according to claim 12,
**characterised in that** the locking sleeve (9) comprises on the side of the delimitation surface (17) facing away from the inclined surface (13) a projecting edge (40) as an end for the delimitation area (18).

14. Toolholder according to one of the claims 1 to 13,
**characterised in that** on one free end (19) of the tool spindle (2) a guide (21) is provided which is in engagement with a corresponding counter element (20) of the chuck (3) in the mounted state.

## Revendications

1. Porte-outils pour un outil électrique, notamment pour une visseuse, avec une broche à outil (2) pouvant être commandée en rotation, un mandrin de serrage (3) échangeable et amovible, pouvant être fixé par enclenchement sur la dite broche à outil (2), et avec un élément d'arrêt (4) prévu pour la fixation du mandrin de serrage (3) sur la broche à outil (2), ledit élément d'arrêt étant coulissant dans le sens radial et venant en prise en une position de montage du mandrin de serrage (3) dans un dégagement d'arrêt (8) de la broche à outil (2) et l'élément d'arrêt (4) étant bloqué dans une position de blocage d'un élément de verrouillage (5) par l'élément de verrouillage (5), **caractérisé en ce que** l'élément de verrouillage (5) est configuré comme douille verrou (9) coulissant dans le sens radial, chevauchant l'élément d'arrêt (4) de manière radiale sur le côté extérieur dans la position de blocage, et **en ce qu'**au moins un élément de commande (6) coulissant dans le sens radial est prévu, ledit élément de commande pouvant être coulissé de manière radiale vers l'extérieur à l'aide d'un contour de surface (11) prévu côté broche, élément de commande au moyen duquel la douille verrou (9) peut être déplacée automatiquement lors de l'application du mandrin de serrage (3) sur la broche à outil (2) dans une position de libération libérant au moins partiellement l'élément d'arrêt (4), **en ce que** la douille verrou (9) peut être déplacée dans le sens axial contre une tension de ressort dans la position de libération, au moyen d'une surface oblique (13) intérieure se trouvant en interaction avec l'élément de commande (6).

2. Porte-outils selon la revendication 1, **caractérisé en ce que** l'élément d'arrêt (4) destiné à la fixation du mandrin de serrage (3), transférant un couple et assurant ce dernier de manière axiale est prévu sur la broche à outil (2).

3. Porte-outils selon la revendication 1 ou 2, **caractérisé en ce que** l'élément d'arrêt (4), l'élément de commande (6) et l'élément de verrouillage (5) sont intégrés dans le mandrin de serrage (3).

4. Porte-outils selon l'une quelconque des revendications 1 à 3, **caractérisé en ce que** l'élément d'arrêt (4) est configuré comme bille d'arrêt (7) coulissant dans le sens radial.

5. Porte-outils selon la revendication 4, **caractérisé en ce que** plusieurs billes d'arrêt (7), notamment quatre, sont prévues, les dites billes d'arrêt étant disposées dans le sens périphérique et à équidistance avec des dégagements d'arrêt (8) correspondants.

6. Porte-outils selon la revendication 4 ou 5, **caractérisé en ce que** l'élément de commande (6) est configuré comme bille de commande (10) coulissant dans le sens radial.

7. Porte-outils selon la revendication 6, **caractérisé en ce que** le contour de la surface (11) est formé par un ajustement fin cylindrique (14) de la broche à outil (2) pour le mandrin de serrage (3).

8. Porte-outils selon la revendication 6 ou 7, **caractérisé en ce que** plusieurs billes de commande (10) sont prévues dans le sens périphérique et à équidistance, notamment deux billes de commandes diamétralement opposées avec des dégagements de repos (15) correspondants.

9. Porte-outils selon l'une quelconque des revendications 6 à 8, **caractérisé en ce que** la douille verrou (9), lors de l'application du mandrin de serrage (3) sur la broche à outil (2), peut être déplacée moyennant la bille d'arrêt (7) agissant sur la surface oblique (13) au-delà de la position de libération, dans une position finale libérant intégralement ladite bille d'arrêt (7).

10. Porte-outils selon la revendication 9, **caractérisé en ce que** la bille d'arrêt (7) et la bille de commande (6) sont disposées en quinconce l'une par rapport à l'autre dans le sens axial, notamment à une distance de 1 à 2 mm environ.

11. Porte-outils selon l'une quelconque des revendications 6 à 10, **caractérisé en ce qu'**une bague d'arrêt (16) est prévue autour du mandrin de serrage (3), ladite bague d'arrêt coulissant dans le sens axial et se trouvant en interaction avec la douille verrou (9).

12. Porte-outils selon la revendication 11, **caractérisé en ce que** du fait de la surface oblique (13) de la douille verrou (9) et d'une surface de délimitation (17) notamment périphérique de la bague d'arrêt (16), il existe un espace de délimitation (18) pour la bille de commande (10).

13. Porte-outils selon la revendication 12, **caractérisé en ce que** la douille verrou (9) comporte sur le côté opposé à la surface oblique (13) de la surface de délimitation (17) un bord faisant saillie (40) représentant la bordure de l'espace de délimitation (18).

14. Porte-outils selon l'une quelconque des revendications 1 à 13, **caractérisé en ce qu'**au niveau d'une extrémité libre (19) de la broche à outil (2) est prévu un guidage (21) étant en prise avec un pendant correspondant (20) du mandrin de serrage (3) à l'état monté.
